# EUROPEAN PATENT SPECIFICATION

(11) **EP 0 212 466 B1**
(45) Date of publication and mention of the grant of the patent: **17.03.1993**
(21) Application number: 86110916.3
(22) Date of filing: 07.08.1986
(51) Int. Cl.: B31D 5/00

(54) **Method for forming filter element and forming apparatus therefor**
Verfahren zum Bilden von Filterelementen und Apparat dafür
Procédé pour former des éléments de filtre et appareil à cet effet

(30) Priority: 12.08.1985 JP 175654/85
(43) Date of publication of application: 04.03.1987
(73) Proprietor: NIPPONDENSO CO., LTD., Kariya-shi Aichi-ken (JP)
(72) Inventor: Iwase, Takatoshi, Anjo-shi Aichi-ken (JP); Hakamada, Kouhei, Toyota-shi Aichi-ken (JP)
(74) Representative: Klingseisen, Franz, Dipl.-Ing.

(56) References cited:
- EP-A- 0 058 994
- DE-A- 3 505 854
- DE-C- 827 582
- GB-A- 1 012 534
- US-A- 2 984 160
- US-A- 4 201 119

## Description

The invention relates to a method and an apparatus for forming a filter element according to the preamble of claim 1 and claim 3, respectively.

US-A-2,984,160 discloses an appratus for forming a filter element from a sector shaped sheet which is prebent by hand in such a way that a plurality of wavy portions are provided. This prebent sheet is laid down on a working table of the apparatus whereupon flexible holding strips are inserted into the valleys of the wavy portions. These strips are rounded and simultaneously the pitch between the strips is reduced by shifting an handle manually so that the sheet is rounded and reduced in radial length simultaneously. After this rounding and reducing step the teeth of a rectifying device are inserted into the valleys of the sheet which rectifying device serves also as a retaining means during the joining of two such sections of a sheet to receive a circular filter element.

It is the object of the present invention to provide an automatic apparatus and a corresponding method for forming a filter element.

This object is achieved by the features in the characterizing part of claim 1 and claim 3, respectively.

### BRIEF DESCRIPTION OF THE DRAWINGS

Fig. 1 is a side view showing the apparatus of the present invention schematically.

Fig. 2 is a perspective view of the sheet which is prepared in the apparatus shown in Fig. 1.

Fig. 3 is a perspective view of the sheet, the shape of which is formed by the apparatus shown in Fig. 1.

Fig. 4 is a schematic view showing the relationship between the pantograph and the cam plate.

Fig. 5 is a sectional view showing the cross-sectional shape of holding wedges and explaining the relationship between the holding wedges and the wavy portions of the sheet.

Fig. 6 is a top view showing the main structure of the rounding means.

Fig. 7 is a top view showing the main structure of the forming means.

### DESCRIPTION OF THE PREFERRED EMBODIMENT

A preferred embodiment of the present invention is described as follows with reference to the drawings.

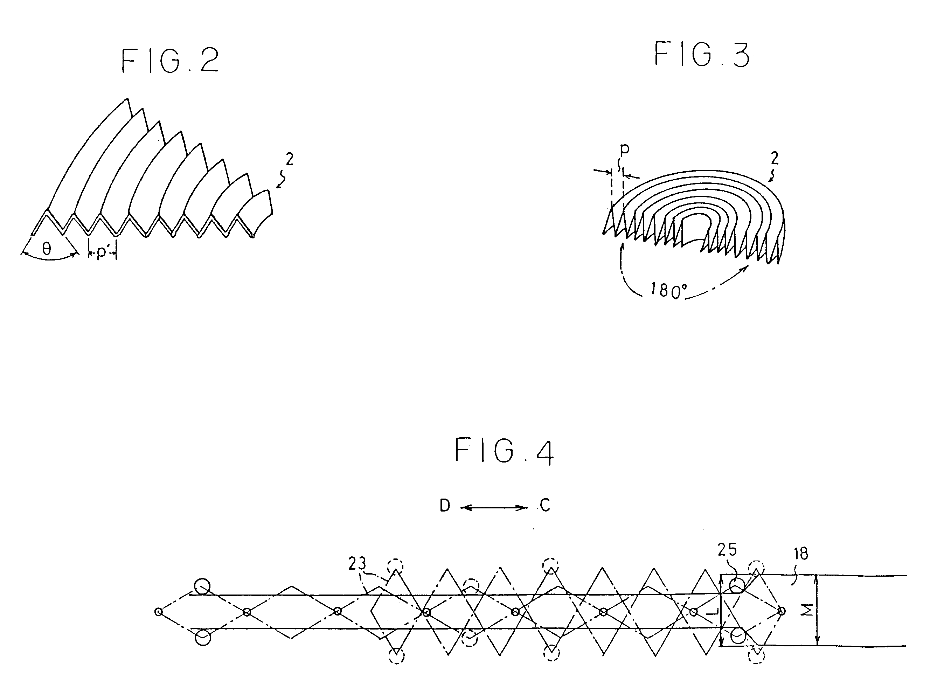

Fig. 2 shows a sector-shaped sheet 2 of non-texile cloth, which is used as a filter element of the present invention. This sheet 2 is bent to make a plurality of wavy portions in such a manner that a vertical angle becomes about 90° and that the wavy portions are provided concentrically. This sheet is reduced in its radial length by a reducing step according to the present invention and an element of semicircular shape is made as shown in Fig. 3. After the sheet has become semicircular by rounding, the sheet is then rounded again by another rounding machine (not shown) to receive a circular shape as shown in Fig. 8(c).

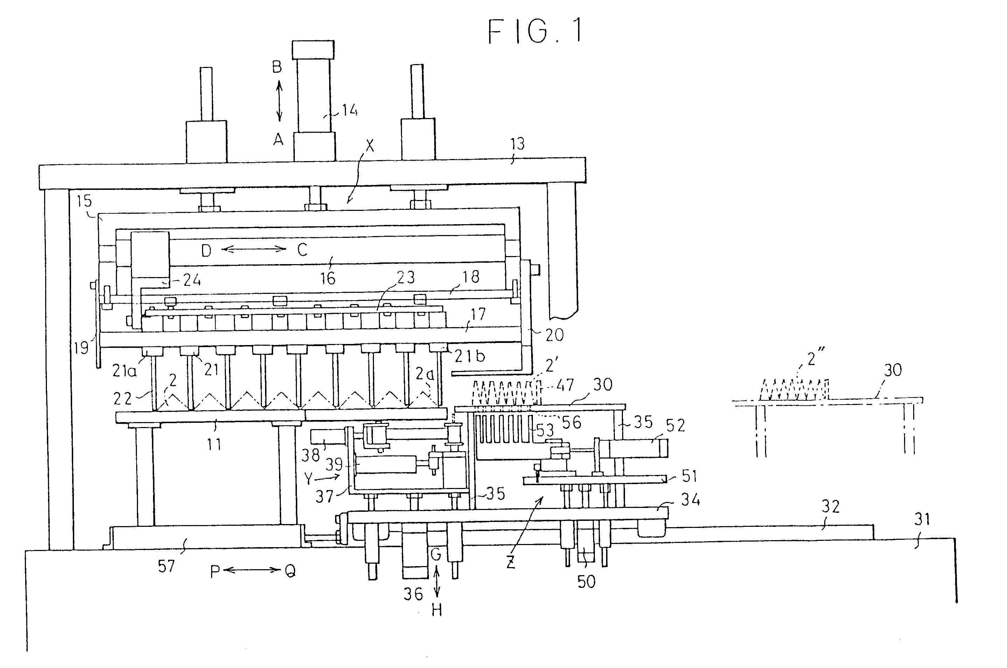

As shown in Fig. 1, the apparatus of this invention has a horizontal working table 11 and reducing means X provided under a frame 13 which is arranged such that the frame 13 is parallel with the working table 11. The reducing means X has an elevating frame 15 supported by a rod of a cylinder 14 which is vertically fixed with the frame 13. The elevating frame 15 also supports a rodless cylinder 16 horizontally. The elevating frame 15 supports a shaft 17 and a cam plate 18 which are arranged in parallel with the rodless cylinder 16. The shaft 17 is supported by the elevating frame 15 via a couple of brackets 19 and 20, and sliding pieces 21 are provided on the shaft 17 in such a manner that the sliding pieces 21 can slide along the shaft 17. Each sliding piece 21 has a holding wedge 22 at lower end thereof, and each sliding piece 21 is connected with a common pantograph 23 having an equal pitch between adjacent sliding pieces 21. The leftmost sliding piece 21a is connected with a slider 24 of the rodless cylinder 16. Accordingly, each sliding piece 21 and holding wedge 22 is moved while a predetermined interval is kept between each of them, when the rodless cylinder 16 is moved toward direction C in Fig. 1.

When the rodless cylinder 16 is moved, the rightmost sliding piece 21b (basic piece) is not moved, but maintains its position until a predetermined timing described as follows. Since each of the pieces 21 is connected with the pantograph 23, the left side pieces move to the right, when the pantograph reduces the interval between adjacent pieces 21. After the pitch between the adjacent holding wedges has become equal to a predetermined pitch P (shown in Fig. 3) of the sheet 2, that is, after the length between a couple of rollers, which is provided at the rightmost end of the pantograph, has become as long as the longest width of the came plate 18, each of the sliding pieces 21 including the rightmost piece 21b starts to move toward C direction. Consequently the right edge 2a of the sheet is prevented from being inserted into the gap between the working table 11 and an auxiliary working table 30, when the sheet 2 is transferred from the working table 11 to the auxiliary working table 30.

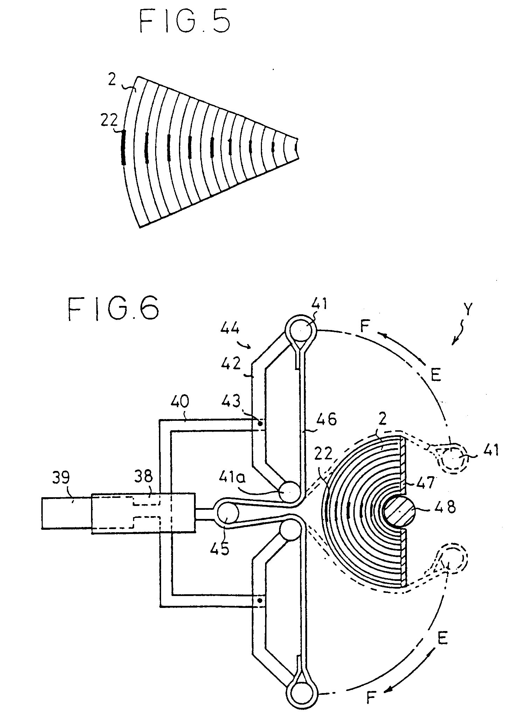

As shown in Fig. 5, the cross-sectional shape of the holding wedge 22 is arched in order to match the wavy portions of the sheet 2, and the width of the holding wedge 22 gradually reduces in the radial direction of the sheet 2. That is, the width of the right side holding wedge 22 is smaller than that of the left side holding wedge 22 as shown in Fig. 5. The pitch of the holding wedges 22 should be the same as the pitch p' of the wavy portions of the sheet 2 (shown in Fig. 2). The pitch p', of course, can be varied according to the variation of the sheet 2.

The operation of the reducing means is explained as follows. First, the sector-shaped sheet, which has wavy portions, is set on the working table in such a manner that the center portion of the sheet is on the right in Fig. 1.
Then, the elevating frame 15 is moved downwardly (direction A in Fig. 1) by the cylinder 14. The rodless cylinder 16, the shaft 17, the sliding pieces 21 and the holding wedges 22 are also moved downwardly according to the movement of the elevating frame 15, so that the end portions of the holding wedges 22 are inserted into the valley portions of the wavy portions for holding the sheet 2 between the holding wedges 22 and the working table 11, as shown in Fig. 1. Then the rodless cylinder 16 starts moving the slider 24 toward direction C in Fig. 1. The movement of the slider 24 causes the holding wedges 22 to move to the right and also to reduce the radial length of the sheet 2. The movement of the slider 24 also carries the sheet 2 to the predetermined position 2' on the auxiliary working table 30.

Then the sheet 2 on the auxiliary working table 30 is rounded. The rounding member is positioned under the working table 11, as long as the rounding member does not work, and the rounding member is located on the auxiliary working table 30 only when the rounding member operates. Namely, the rounding member is provided on the slide base 34, which is slidably mounted on a couple of rails 32 via a slide bearing 33. The rails 32 are provided on the base 31. The auxiliary working table 30 is also mounted on the slide base 34 via a column 35. A cylinder 36 is located vertically on the slide base 34, and a sub-base 37 is fixed to the end portion of the rod of the cylinder 36, so that the sub-base 37 can be elevated vertically. Since a rounding means Y is provided on the sub-base 37, the rounding means Y can be switched in its position between a working position and a housing position by the reciprocating movement (direction G and H) of the cylinder 36.

The main structure of the rounding means Y is described in Fig. 6. The rounding means Y has a couple of cylinders 38 and 39, which are fixed to the sub-base 37 horizontally. An U-shaped bracket 40 is fixed to the end portion of the lower cylinder 39, and a couple of links 42, at which rollers 41 and 41a are provided, are linked to the end portion of the bracket 40 in such a manner that the link 42 can rotate freely, so that the bracket 40, the link 42 and the pin 43 form an arm 44. A roller 45 is connected rotatably with the end portion of the rod of the upper cylinder 38. A belt 46 extends over these rollers 41, 41a and 45, and both ends of the belt are fastened to the rollers 41 and 41.

The operation of the rounding means is explained as follows. The sheet 2, which has already been bent by the step of reducing the radial length, which step has been described above, is set on the auxiliary working table 30. The rounding means Y is elevated by the movement of the cylinder 36 in order to change its position to the working position. After that, the cylinder 39 starts to move the rod to the right, so that the rod makes the arm 44 move to the right and causes the link 42 and the roller 41 to rotate toward the direction E. The rotation of the roller 41 lays the belt 46 around the sheet as shown by dotted line in Fig. 6.

A limiting plate 47, which limits the central angle of the sheet 2, and a pin 48, which fixes the central position of the sheet 2, are provided on the auxiliary working table 30. Since the rollers 41 travel beyond the position of the limiting plate 47, the sheet 2 is pressed by the belt 46 and is reformed, until the central angle of the sheet 2 becomes as wide as 180°. While the belt 46 is laid around the sheet, the tension force of the belt 46 is controlled by the movement of the cylinder 38, and the tension force of the belt 46 is modified in accordance with the number of the wavy portions of the sheet.

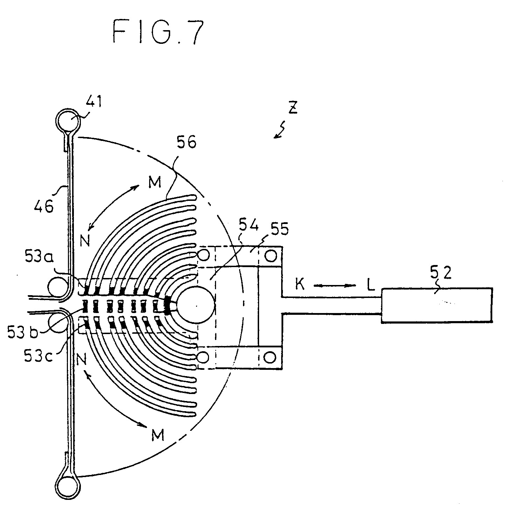

After that, the sheet is reformed further in order to make the shape of the wavy portions circular, while its position is being kept. The reforming means Z is arranged under the auxiliary working table 30. As shown in Fig. 1, the reforming means Z as well as the rounding means Y have a vertical cylinder 50, which is fixed on the slide base 34. A sub-base 51 is fixed at the end portion of the rod of the cylinder 50, and a horizontal cylinder 52 is provided on the sub-base 51. As shown in Fig. 7, a holder 54 is fixed with the end portion of the rod of the cylinder 52 via the bracket 55. The holder 54 comprises three portions, each of which has a plurality of reforming wedges 53a, 53b and 53c. These reforming wedges 53a, 53b and 53c are embodied in a way that the pitch between the reforming wedges is matches the pitch of the wavy portions of the sheet which has already been reduced in its radial length. The reforming wedge 53b located at the center position is fixed, the reforming wedges 53a and 53c located at the right side and left side of the central reforming wedge 53b, on the other hand, are linked with the holder 54 in such a manner that both reforming wedges 53a and 53c are pivoted in the direction M in Fig. 7, when the holder 54 is moved.

A plurality of semicircular slots 56, which function as the rotating guide of the reforming wedges 53a and 53c, are provided on the auxiliary working table 30.

The operation of this reforming means Z is described as follows. The reforming wedges 53 are elevated from their housing position toward the underside of the sheet through the slots 56 by the movement of the cylinder 50, so that the top edge of each forming wedge 53 is inserted into the valleys between the wavy portions of the sheet 2. At the same time, the holding wedges 22 which had maintained the form of the sheet 2, start moving outward for returning to the starting position of the means X for reducing the radial length. Then the cylinder 52 makes the bracket 55 move toward direction K in Fig. 7 and the movement of the bracket 55 makes the holder 54 rotate clockwise and counterclockwise via the linking member, so that the reforming wedges 53a and 53c are pivoted along the slot 56 toward direction M. Therefore, the shape of the wavy portions of the sheet 2 can be modified to be preferably a circle which is determined by the slots 56.

After that the reforming wedges 53 move downward from the sheet 2, and return to the resting position of the rounding means Y and reforming means Z. The reformed sheet 2, then, is moved toward the position of "2''" in Fig. 1 by (Q direction) movement to the right of the cylinder 57, which is connected to the left side of the slide base 34 in order to carry the sheet 2 toward the next step.

According to the present invention the forming process of the filter element, which has been done by manpower, can be carried out automatically. Furthermore, since the reforming wedges are pivoted along with the wavy portions of the sheet during the rounding step, the filter element can be formed till it becomes absolutely circular and the density of the filter element can be made uniform. The method and also the apparatus of the present invention can be used for assembling a filter element, even if the size and the number of the wavy portions of the sheet vary, so that the present invention is very effective.

## Claims

1. Method for forming a filter element comprising folding a sector shaped sheet (2) in such a way that a plurality of ridges of wavy portions are provided in circumferential direction, holding said folded sector shaped sheet (2) by inserting a plurality of holding elements (22) toward the valleys between the ridges of said wavy portions,
reducing the radial length of said sheet (2) by reducing the pitch between the holding elements and by forcing the sheet (2) toward the central portion thereof, while the central portion is kept in its position,
rounding said folded sector shaped sheet (2) until the central angle of said sector shaped sheet becomes substantially 180°, and rectifying said rounded sector shaped sheet by sliding reforming wedges (53) along predetermined circular trails,
characterized in that
the folded sector shaped sheet (2) is reduced in radial length before rounding.

2. Method for forming a filter element as claimed in claim 1, wherein:
said reducing step for reducing the radial length of said sheet is carried out by moving said holding wedges (22) toward a central portion of said sector shaped sheet (2) while a position of said central portion of said sheet is kept at the predetermined position.

3. Apparatus for forming a filter element comprising a working table (11) for holding a sector shaped sheet (2), which is preliminary folded to have a plurality of wavy portions,
reducing means (X) for reducing the radial length of said sheet, which reducing means is provided with a plurality of holding elements (22) facing to valley portions of said wavy portions of said sector shaped sheet (2), wherein the pitch between adjacent holding elements (22) is reduced, rounding means (Y) for rounding said sheet (2), which consists of at least a flexible member (46) and forces said sheet inwardly toward a stop member (47) that limits the central angle of said sheet (2) and a reforming member (Z) having a plurality of reforming wedges (53) to be inserted into the valleys of said wavy portions and sliding along semicircular trails,
characterized in that
an auxiliary working table (30) is provided on which said sheet (2) provided with already reduced radial length is supplied,
that the rounding means (Y) the flexible member (46) of which is laid around the outer edge of said sheet (2) is provided on the auxiliary table (30) and that the reforming member (Z) is provided on said auxiliary working table (30) cooperating with said rounding member (Y) for reforming the semicircular shape of said wavy portions.

4. An apparatus for forming a filter element as claimed in claim 3, wherein:
said varying means is a pantograph (23) and said holding wedges (22) are connected with said pantograph (23).

5. An apparatus for forming a filter element as claimed in claim 3, wherein:
said rounding means (Y) further comprises an arm (44) to which said soft member (46) is connected and a cylinder (36) reciprocating said arm (44) in such a manner that said soft member (46) is laid around the outer side of said sheet (2) when said cylinder (36) moves said arm (44) forwardly.

6. An apparatus for forming a filter element as claimed in claim 3, wherein:
said limiting member having a limit plate (47) to which the side edges of said sector shaped sheet (2) abut and a pin (48) to which the inner circular edge of said sheet abut.

## Patentansprüche

1. Verfahren zum Bilden eines Filterelements umfassend
Falten einer sektorartig gestalteten Tafel (2) in solch einer Weise, daß eine große Anzahl von Wulsten von gewellten Abschnitten in Umfangsrichtung vorgesehen ist,
Halten der gefalteten, sektorartig gestalteten Tafel (2) durch Einsetzen einer großen Anzahl von Halteelementen in den Tälern zwischen den Wulsten der gewellten Abschnitte,
Reduzieren der Radiallänge der Tafel (2) durch Reduzieren des Abstandes zwischen den Halteelementen und durch Drücken der Tafel (2) zu deren Zentralabschnitt hin, während der Zentralabschnitt in seiner Position gehalten wird,
Runden der gefalteten, sektorartig gestalteten Tafel (2), bis der Zentralwinkel der sektorartig gestalteten Tafel im wesentlichen 180^{o} wird, und Gleichrichten der gerundeten, sektorartig gestalteten Tafel durch Gleiten umformender Stellkeile (53) die vorgegebenen kreisförmigen Wege entlang,
**dadurch gekennzeichnet,**
daß die gefaltete, sektorartig gestaltete Tafel (2) vor dem Runden in Radiallänge reduziert wird.

2. Verfahren zum Bilden eines Filterelements nach Anspruch 1, worin die reduzierende Stufe zum Verringern der Radiallänge der Tafel durch Bewegen der Haltekeile (22) zu einem Zentralabschnitt der sektorartig gestalteten Tafel (2) hin ausgeführt wird, während eine Position des Zentralabschnitts der Tafel in der festgelegten Position geblieben ist.

3. Apparat zum Bilden eines Filterelements, bestehend aus
einem Werktisch (11) zum Halten einer sektorartig gestalteten Tafel (2), die vorausgehend gefaltet ist, um eine große Anzahl von gewellten Abschnitten zu haben,
einem Reduziermittel (X) zum Verringern der Radiallänge der Tafel, welches Reduziermittel mit einer großen Anzahl von Halteelementen (22) versehen ist, die den Talabschnitten der gewellten Abschnitte der sektorartig gestalteten Tafel (2) gegenüberliegt, worin der Abstand zwischen nebeneinanderliegenden Halteelementen (22) verringert wird,
einem Rundungsmittel (Y) zum Runden der Tafel (2), das aus wenigstens einem biegsamen Teil (46) besteht und die Tafel einwärts zu einem Stoppteil (47) hin drückt, das den Zentralwinkel der Tafel (2) begrenzt, und
einem umformenden Teil (Z), das eine große Anzahl von umformenden Stellkeilen (53) hat, die in die Täler der gewellten Abschnitte eingesetzt werden und halbkreisförmige Wege entlang gleiten,
**dadurch gekennzeichnet,**
daß ein Hilfs-Werktisch (30) vorgesehen ist, auf welchem die mit bereits verringerter Radiallänge versehene Tafel (2) bereitgestellt wird,
daß als das Rundungsmittel (Y) das biegsame Teil (46), das um die Außenkante der Tafel (2) herumgelegt wird, auf dem Hilfs-Tisch (30) vorgesehen ist und
daß das umformenden Teil (Z) auf dem Hilfs-Werktisch (30) vorgesehen ist, das mit dem Rundungsteil (Y) zum Umformen der halbkreisförmigen Gestalt der gewellten Abschnitte zusammenarbeitet.

4. Apparat zum Bilden eines Filterelements nach Anspruch 3, worin das sich ändernde Mittel ein Pantograph (23) ist und die Haltekeile (22) mit dem Pantographen verbunden sind.

5. Apparat zum Bilden eines Filterelements nach Anspruch 3, worin das Rundungsmittel (Y) ferner einen Arm (44) aufweist, mit welchem das nachgiebige Teil (46) verbunden ist, und einen Zylinder (36), dessen Arm in solch einer Weise hin und her geht, daß das nachgiebige Teil (46) um die Außenseite der Tafel (2) herumgelegt wird, wenn der Zylinder (36) den Arm (44) vorwärts bewegt.

6. Apparat zum Bilden eines Filterelements nach Anspruch 3, worin das begrenzende Teil eine Begrenzungsplatte (47) hat, an welcher die Seitenkanten der sektorartig gestalteten Tafel (2) anstoßen, und einen Zapfen (48), an welchem die innere kreisförmige Kante der Tafel anstößt.

## Revendications

1. Procédé pour former un élément de filtre comprenant les opérations suivantes :
le pliage d'une feuille en forme de secteur (2) de telle façon que plusieurs des arêtes des portions ondulées soient agencées en direction circonférentielle, le maintien de cette feuille en forme de secteur pliée par l'insertion de plusieurs éléments de retenue (22) en direction des vallées entre les crêtes des portions ondulées,
la réduction de la longueur radiale de la feuille (2) en réduisant le pas entre les éléments de retenue et en forçant la feuille (2) vers sa portion centrale tandis qu'une portion centrale est maintenue dans sa position,
l'arrondissage de la feuille en forme de secteur pliée (2) jusqu'à ce que l'angle central de la feuille en forme de secteur atteigne sensiblement 180° et le redressage de la feuille en forme de secteur arrondie en faisant glisser des coins de reformage (53) le long de pistes circulaires prédéterminées,
caractérisé en ce que
la feuille en forme de secteur pliée (2) est réduite dans la longueur radiale avant d'être arrondie.

2. Procédé pour la formation d'un élément de filtre selon la revendication 1, dans lequel :
l'étape de réduction destinée à réduire la longueur radiale de la feuille s'effectue en déplaçant les coins de retenue (22) en direction de la portion centrale de la feuille en forme de secteur (2) tandis que l'on maintient la portion centrale de la feuille sur la position prédéterminée.

3. Appareil pour la formation d'un élément de filtre comprenant
une table de travail (11) destinée à maintenir une feuille en forme de secteur (2) qui est préalablement pliée pour présenter plusieurs portions ondulées,
des moyens de réduction (X) pour réduire la longueur radiale de la feuille, lesquels moyens de réduction sont munis de plusieurs éléments de retenue (22) faisant face aux portions de vallée des portions ondulées de la feuille en forme de secteur (2), dans lequel le pas entre les éléments de retenue contigus (22) est réduit, des moyens (Y) permettant d'arrondir la feuille (2) qui consistent en au moins un élément souple (46) et forcent la feuille vers l'intérieur en direction d'un élément de butée (47) qui limite l'angle central de la feuille (2) et un élément de reformage (Z) ayant plusieurs coins de reformage (53) à introduire dans les vallées des portions ondulées et à faire coulisser le long de pistes semi-circulaires,
caractérisé en ce qu'une table de travail auxiliaire (40) est prévue sur laquelle on amène la feuille (2) ayant sa longueur radiale déjà réduite,
en ce que les moyens d'arrondissage (Y), dont l'élément souple (46) est posé autour du bord extérieur de la feuille (2), sont amenés sur la table auxiliaire (30) et en ce que l'élément de reformage (Z) est amené sur la table de travail auxiliaire (30) pour coopérer avec les moyens d'arrondissage (Y) pour le reformage de la forme semi-circulaire des portions ondulées.

4. Appareil pour la formation d'un élément de filtre selon la revendication 3, caractérisé en ce que :
les moyens de variation sont constitués par un pantographe (23) et les coins de retenue (22) sont raccordés au pantographe (23).

5. Appareil destiné à former un élément de filtre selon la revendication 3, dans lequel :
les moyens d'arrondissage (Y) comprennent de plus un bras (44) sur lequel est raccordé un élément mou (46) et un vérin (36) déplaçant le bras (44) en va-et-vient de telle sorte que l'élément mou (46) est posé autour du côté extérieur de la feuille (2) lorsque le vérin (36) déplace le bras (44) vers l'avant.

6. Appareil destiné à former un élément de filtre selon la revendication 3, dans lequel :
l'élément de limitation comporte une plaque limite (47) sur laquelle les bords latéraux de la feuille en forme de secteur (2) viennent en butée et un axe (48) sur lequel vient s'appuyer le bord circulaire intérieur de la feuille.
